# EUROPEAN PATENT APPLICATION

(11) **EP 4 837 866 A1**
(43) Date of publication of application: **11.11.2026**
(21) Application number: 25174844.8
(22) Date of filing: 07.05.2025
(51) Int. Cl.: B65G 41/00, B65G 67/08, B65G 69/22, B65G 21/14

(54) **DEVICE FOR LOADING AND UNLOADING GENERAL CARGO FROM A SHIPPING CONTAINER OR TRUCK**

(71) Applicant: De With group B.V., 3851 SC Ermelo (NL)
(72) Inventor: Telgenkamp, Peter, 3851 SC Ermelo (NL); Vermeer, Wilco, 3851 SC Ermelo (NL)
(74) Representative: 't Jong, Bastiaan Jacob

(57) **Abstract**

The invention relates to a device for loading and unloading general cargo from a shipping container or truck, which device comprises:
- a movable frame;
- an height adjustable platform arranged to the movable frame;
- a first conveyor, such as a conveyor belt or roller conveyor, tiltable arranged with one end to the movable frame and with the other end extendable over the platform,
wherein the height adjustable platform is arranged tiltable to the movable frame between a first, horizontal position and a second, upright position.

## Description

The invention relates to a device for loading and unloading general cargo from a shipping container or truck, which device comprises:
- a movable frame;
- an height adjustable platform arranged to the movable frame;
- a first conveyor, such as a conveyor belt or roller conveyor, tiltable arranged with one end to the movable frame and with the other end extendable over the platform.

General cargo is shipped in containers or trucks, wherein the general cargo, such as boxes and packages, is placed on the floor of the container or truck and stacked on top of each other. This is done by hand.

In order to relieve the workers loading or unloading containers and trucks with general cargo, devices according to the preamble are known. With the height adjustable platform, the workers can be positioned at an optimal, ergonomic height relative to a box or package which need to be handled, such that the worker can easily move the box or package between a position in the shipping container or truck and the first conveyor of the device.

Such a device is for example known from US 20230045842.

Present distribution centers are designed with docks for trucks to dock at and telescopic conveyors arranged behind the dock to convey the general cargo during loading or unloading of the truck. The telescopic conveyor can extend into the truck such that the end of the telescopic conveyor is close to the position within the truck where the general cargo is present. This ensures that the workers do not need to walk with the cargo and only need to lift the cargo between the telescopic conveyor and the position within the truck.

The present distribution centers are optimized with regard to floor space and the telescopic conveyors are typically arranged such that there is very limited space between the end of the telescopic conveyor and the corresponding dock. As a result, there is no sufficient space for a loading or unloading device according to the preamble, when the dock is closed or a fully packed truck is docked.

Remodeling the distribution center to fit the known devices between the telescopic conveyors and the dock is undesired. This would involve considerable costs, not only for the remodeling itself, but also as result of the downtime of the distribution center.

Accordingly, it is an object of the invention to reduce the above mentioned disadvantages.

This object is achieved according to the invention with a device according to the preamble, which is characterized in that the height adjustable platform is arranged tiltable to the movable frame between a first, horizontal position and a second, upright position.

Because the platform can be tilted into an upright position space is freed, which allows for example for an overhead door to close the dock or for the doors of the truck to swing open.

When the dock is opened and the truck doors are opened, the platform can be tilted into the horizontal position and the loading or unloading can start.

In a preferred embodiment of the device according to the invention the first conveyor is tiltable to at least an upright position.

In known devices the first conveyor is already tiltable over a large angular range. Having the first conveyor to be tilted into an upright position ensures that together with the platform in upright position, the device according to the invention takes up little space.

Yet another preferred embodiment of the device according to the invention further comprises a second conveyor arranged adjacent to the first end of the first conveyor, which second conveyor is arranged to be positioned at least partly over a supply conveyor, such as a telescopic conveyor.

Having the second conveyor positioned partly over a supply conveyor ensures that even if the device is not optimally aligned with the supply conveyor, the cargo still is reliably transported over the first and second conveyor onto the supply conveyor.

In yet another embodiment of the device according to the invention a ski-jump is arranged adjacent to the end of the second conveyor distant from the first conveyor. The ski-jump allows for boxes and packages to easily transition from the supply conveyor onto the second conveyor of the device, when the device is used for loading a container or truck.

In a further preferred embodiment of the device according to the invention the movable frame comprises a U-shaped base-frame provided with wheels to move the frame over a ground surface, wherein the tilting axis of the height adjustable platform is arranged over the base of the U-shape of the base-frame and wherein the adjustable platform in the first, horizontal position extends from the tilting axis in opposite direction as the legs of the U-shape of the base-frame.

The U-shaped base-frame can be moved around the end of a supply conveyor, such that the space in front of the supply conveyor is even less occupied by the device.

Preferably, at least one counterweight is arranged on at least one of the legs of the U-shape of the base-frame. The counterweight may be needed depending on the weight of the workers on the platform of the device in order to prevent the device from tipping over.

In a yet another embodiment of the device according to the invention the movable frame further comprises a guide frame arranged upright on the base of the U-shape of the base-frame and wherein the tilting axis of the platform and the tilting axis of the first conveyor is guided along the guide frame.

Preferably, the height adjustable platform can be shifted sideways parallel to the tilting axis of the platform. When the device is not fully aligned with the truck or container, the shifting allows for small adjustments, such that the platform does not contact the sidewalls of the cargo space.

The invention also relates to a combination of a supply conveyor, in particular a telescopic conveyor, and a device according to the invention, wherein the device is positioned in front of the supply conveyor with the first conveyor substantially in line with the supply conveyor.

Preferably, the base of the U-shape of the base-frame is positioned in front of the supply conveyor and with the legs of the U-shape of the base-frame on either side of the supply conveyor.

These and other features of the invention will be elucidated in conjunction with the accompanying drawings.
Figure 1 shows a perspective view of an embodiment of the device according to the invention.
Figures 2A - 2C show a side view of the device in three different positions during use of the device.
Figures 3A and 3B show a top view of the device according to the invention in two different positions during use.

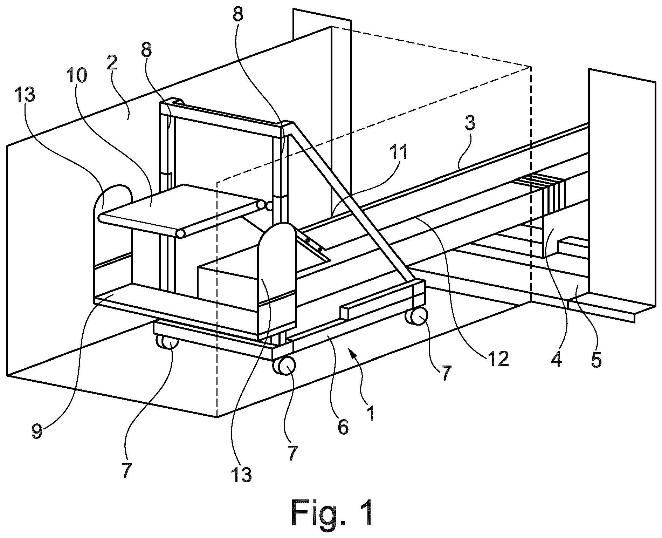

Figure 1 shows a perspective view of an embodiment 1 of the device according to the invention. The device 1 is positioned inside of a shipping container or truck 2 in front of a telescopic conveyor 3, which is mounted with its base 4 just beyond the opening of a loading dock 5.

The device 1 has a U-shaped base frame 6 provided with wheels 7. A guide frame 8 is arranged upright on the base of the U-shape of the base-frame 6. Along this guide frame 8 a platform 9 is height adjustable as well as a first conveyor 10. Cargo placed on the first conveyor 10 is transported over a second conveyor 11 and a ski-jump 12 onto the telescopic conveyor 3 or vice versa.

The platform 9 is on both ends provided with safety fences 13.

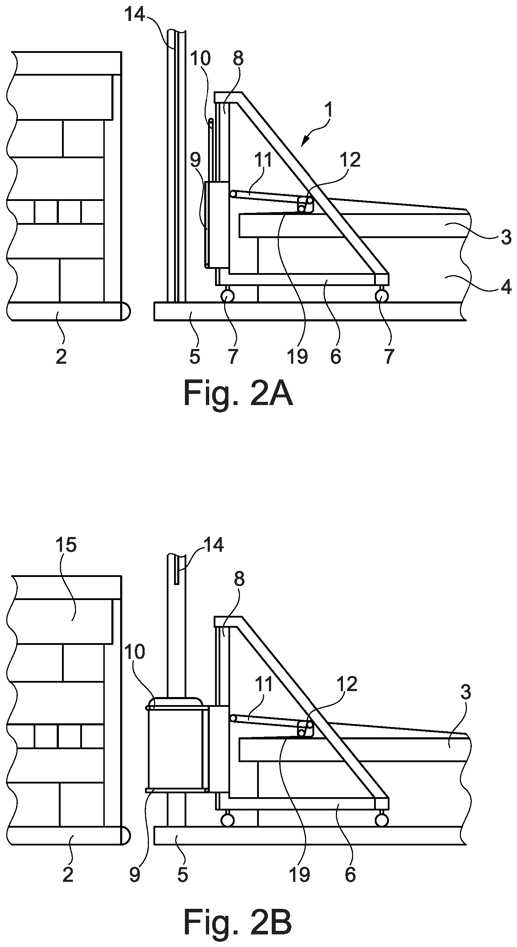

Figure 2A shows a side view of the device 1 positioned inside of the loading dock 5 and with the overhead door 14 of the loading dock 5 closed. The telescopic conveyor 3 is fully retracted and both the platform 9 and the first conveyor 10 of the device 1 are in an upright position. The U-shaped base frame 6 of the device 1 is positioned around the base 4 of the telescopic conveyor 3, such that the legs of the U-shape of the base-frame 6 are on either side of the telescopic conveyor 3, 4. In this way the device 1 can be present in the limited space between the telescopic conveyor 3, 4 and the closed overhead door 14 of the loading dock 5.

A distance holder 19 is provided to ensure that the ski jump 12 maintainsh a fixed distance from the front side of the telescopic belt conveyor (first segment). When the telescopic belt conveyor is retracted, the position of the ski jump 12 will be on one of the other moveable segments but always with the same distance from the front side of the telescopic belt conveyor (first segment).

When a truck 2 with general cargo 15 is docked at the loading dock 5 (see figure 2B), the overhead door 14 is opened and the platform 9 of the device is tilted to the first horizontal position. Also the first conveyor 10 is tilted from the upright position to a horizontal position.

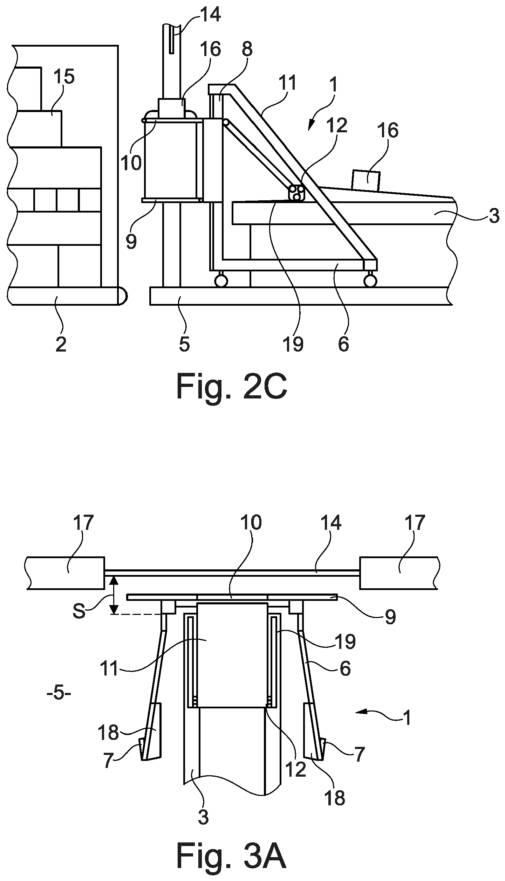

Figure 2C shows the device 1 with the platform 9 and first conveyor 10 raised along the guide frame 8 to a high position, such that the first boxes 16 from the general cargo 15 can be unloaded from the truck 2 by workers. The height of the platform 9 is adjusted to the layer from which the boxes 16 are removed. For the lowest layers, the first conveyor 10 could be tilted into a downward position, such that the workers do not need to lift the boxes 16, but may only shift the boxes 16 in a horizontal plane.

As the unloading of the truck 2 progresses, the device 1 can be moved into the truck 2, while the telescopic conveyor 3 is extend, such as shown in figure 1.

Figure 3A shows a top view of the device 1, corresponding to the side view shown in figure 2A. The telescopic conveyor 3 is positioned inside of the loading dock 5 beyond the opening in the walls 17, which is closed by an overhead door 14. This leaves a limited amount of space S between the telescopic conveyor 3 and the overhead door 14.

The device 1 is positioned with its U-shaped base frame 6 around the telescopic conveyor 3 and with the platform 9 and first conveyor 10 in upright position, such that the device 1 according to the invention still fits in the limited space S.

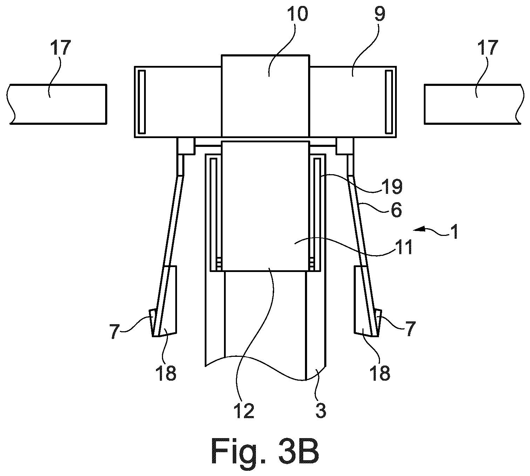

In figure 3B, which corresponds to figure 2B, the overhead door 14 is opened and the platform 9 as well as the first conveyor 10 are positioned in a horizontal position, such that general cargo can be loaded or unloaded from a docked container of truck.

As the overhead door 14 is open, the platform 9 and first conveyor 10 have more space and can therefore be brought in the horizontal position.

The legs of the U-shaped base frame 6 are provided with counter weights 18 to prevent the device 1 from tipping over when workers are standing on the platform 10.

## Claims

1. Device for loading and unloading general cargo from a shipping container or truck, which device comprises:
- a movable frame;
- an height adjustable platform arranged to the movable frame;
- a first conveyor, such as a conveyor belt or roller conveyor, tiltable arranged with one end to the movable frame and with the other end extendable over the platform,
**characterized in that**
the height adjustable platform is arranged tiltable to the movable frame between a first, horizontal position and a second, upright position.

2. Device according to claim 1, wherein the first conveyor is tiltable to at least an upright position.

3. Device according to claim 1 or 2, further comprising a second conveyor arranged adjacent to the first end of the first conveyor, which second conveyor is arranged to be positioned at least partly over a supply conveyor, such as a telescopic conveyor.

4. Device according to claim 3, wherein a ski-jump is arranged adjacent to the end of the second conveyor distant from the first conveyor.

5. Device according to any of the preceding claims, wherein the movable frame comprises a U-shaped base-frame provided with wheels to move the frame over a ground surface, wherein the tilting axis of the height adjustable platform is arranged over the base of the U-shape of the base-frame and wherein the adjustable platform in the first, horizontal position extends from the tilting axis in opposite direction as the legs of the U-shape of the base-frame.

6. Device according to claim 5, wherein at least one counterweight is arranged on at least one of the legs of the U-shape of the base-frame.

7. Device according to claim 5 or 6, wherein the movable frame further comprises a guide frame arranged upright on the base of the U-shape of the base-frame and wherein the tilting axis of the platform and the tilting axis of the first conveyor is guided along the guide frame.

8. Device according to any of the preceding claims, wherein the height adjustable platform can be shifted sideways parallel to the tilting axis of the platform.

9. Combination of a supply conveyor, in particular a telescopic conveyor, and a device according to any of the preceding claims, wherein the device is positioned in front of the supply conveyor with the first conveyor substantially in line with the supply conveyor.

10. Combination according to claim 9 with a device according to any of the claims 5 - 8, wherein the base of the U-shape of the base-frame is positioned in front of the supply conveyor and with the legs of the U-shape of the base-frame on either side of the supply conveyor.
